# EUROPEAN PATENT APPLICATION

(11) **EP 4 604 197 A1**
(43) Date of publication of application: **20.08.2025**
(21) Application number: 25157785.4
(22) Date of filing: 13.02.2025
(51) Int. Cl.: H01M 4/1315, H01M 4/136, H01M 4/36, H01M 4/505, H01M 4/58

(54) **CATHODE ACTIVE MATERIAL, CATHODE FOR LITHIUM SECONDARY BATTERY, AND LITHIUM SECONDARY BATTERY**

(30) Priority: 15.02.2024 KR 20240021977
(71) Applicant: SK On Co., Ltd., Seoul 03161 (KR)
(72) Inventor: BEAK, Min Cheol, Daejeon 34124 (KR); KANG, Min Suk, Daejeon 34124 (KR); KANG, Hyun Sung, Daejeon 34124 (KR); KIM, Seung Hyun, Daejeon 34124 (KR); DO, Ji Yae, Daejeon 34124 (KR); PARK, Young Uk, Daejeon 34124 (KR)
(74) Representative: Prüfer & Partner mbB Patentanwälte · Rechtsanwälte

(57) **Abstract**

A cathode active material includes a first active material and a second active material. The first active material includes an active material having an olivine structure, the second active material includes a lithium-rich oxide, and a weight of the first active material included in the cathode active material is greater than or equal to a weight of the second active material included in the cathode active material. Thereby, a cathode active material having improved overvoltage characteristics may be provided.

## Description

### BACKGROUND

### 1. FIELD

The disclosure and implementations disclosed in this patent document generally relate to a cathode active material, a cathode for a lithium secondary battery, and a lithium secondary battery.

### 2. DESCRIPTION OF THE RELATED ART

Recently, research into electric vehicles (EVs) that may replace fossil fuel vehicles such as gasoline and diesel powered vehicles, which are one of the main causes of air pollution, is being conducted, and lithium secondary batteries with high discharge voltage and output stability are mainly used as the power source for these electric vehicles (EVs).

To improve the performance of lithium secondary batteries, it is necessary to develop technologies that may improve the energy density, life performance, and the like of the cathode for lithium secondary batteries.

### SUMMARY

The present disclosure may be implemented in some embodiments to provide a cathode active material in which overvoltage characteristics may be improved.

According to an aspect of the present disclosure, a cathode for a lithium secondary battery having improved life performance may be provided.

According to an aspect of the present disclosure, energy density of a cathode for a lithium secondary battery may be improved.

A cathode active material, a cathode for a lithium secondary battery, and a lithium secondary battery according to an aspect of the present disclosure may be widely applied in green technology fields such as electric vehicles, battery charging stations, and the like. In addition, a cathode for a lithium secondary battery and a lithium secondary battery according to an aspect of the present disclosure may be used in eco-friendly electric vehicles, hybrid vehicles, and the like to prevent climate change by suppressing air pollution and greenhouse gas emissions.

In some embodiments of the present disclosure, a cathode active material includes a first active material and a second active material. The first active material includes an active material having an olivine structure, the second active material includes a lithium-rich oxide, and a weight of the first active material included in the cathode active material is greater than or equal to a weight of the second active material included in the cathode active material.

In some embodiments, wherein a weight ratio of the first active material and the second active material included in the cathode active material may be 65:35 to 85:15.

In some embodiments, an average particle diameter (D50) of the second active material may be larger than an average particle diameter (D50) of the first active material.

In some embodiments, an average particle diameter (D50) of the first active material may be 0.3 µm to 5 µm.

In some embodiments, an average particle diameter (D50) of the second active material may be 2 µm to 9 µm.

In some embodiments, the first active material may include a carbon coating layer on a surface.

In some embodiments, the carbon coating layer may be included in an amount of more than 0.25 wt% and less than 2 wt% based on a total weight of the cathode active material.

In some embodiments, the active material of the olivine structure may be represented by the following chemical formula 1.

[Chemical Formula 1] LiMePO₄

In the chemical formula 1 above, Me is at least one element selected from the group consisting of Co, Ni, Fe, and Mn.

In some embodiments, the lithium-rich oxide may be represented by the following chemical formula 2.

[Chemical Formula 2] Liₐ[MₓNi_{y}Mn_{z}]O_{b}

In the chemical formula 2 above, M is at least one element selected from the group consisting of Co, Mg, Ti, Al, Fe, Ru, Zr, W, Sn, Sr, Nb, Mo, Cu, Zn, Cr, Ga, V, and Bi, 0≤x≤0.9, 0≤y≤0.9, x+y>0, 0.1≤z≤0.9, 1.8≤a+x+y+z≤2.2, 1.05≤a/(x+y+z)≤1.95, and 1.8≤b≤2.2.

In some embodiments, the cathode active material may be represented by the following chemical formula 3.

[Chemical Formula 3] LiₐNi_{b}Mn_{c}Fe_{d}PₑO_{f}

In the chemical formula 3, 1.002≤a≤1.196, 0.003≤b≤0.196, 0.6≤c≤0.649, 0.204≤d≤0.396, 0.51≤e≤0.99, and 3.02≤f≤3.98.

In some embodiments of the present disclosure, a cathode for a lithium secondary battery includes the cathode active material according to any one of the above-described embodiments.

In some embodiments of the present disclosure, a lithium secondary battery includes the cathode for a lithium secondary battery according to any one of the above-described embodiments.

### BRIEF DESCRIPTION OF DRAWINGS

Certain aspects, features, and advantages of the present disclosure are illustrated by the following detailed description with reference to the accompanying drawings.
FIG. 1 is a drawing illustrating charge/discharge curves for lithium secondary batteries including cathodes according to examples and comparative examples.
FIG. 2 is a drawing illustrating results of evaluating room temperature life characteristics for lithium secondary batteries including cathodes according to examples and comparative examples.

### DETAILED DESCRIPTION

Features of the present disclosure disclosed in this patent document are described by example embodiments with reference to the accompanying drawings.

Hereinafter, the technology disclosed in this specification and its implementation examples will be described in detail with reference to the attached drawings. However, the embodiment of the technology may be modified in various other forms, and the scope thereof is not limited to the implementation examples described below. In addition, the technology disclosed in this specification may be applied not only by being limited to the configurations of the implementation examples described below, but also may be configured by selectively combining all or part of respective implementation examples so that various modifications may be made.

As the demand for lithium secondary batteries increases, a technology capable of manufacturing a cathode having excellent performance is required. In this regard, according to an implementation example, an active material having an olivine structure with excellent structural stability may be applied as a cathode active material to improve the life performance of a cathode for a lithium secondary battery. The active material having the olivine structure has excellent thermal stability, and thus, when this active material is applied as a cathode active material, the degree of deterioration of the material may be relatively small even if the battery undergoes continuous charge/discharge cycles in a high-temperature environment, but the capacity characteristics may be relatively insufficient. For example, when a lithium-manganese-iron-phosphate (LMFP)-based active material having an olivine structure is applied as a cathode active material, the actual capacity (approximately 150 mAh/g) of the cathode active material may be lower than the theoretical capacity (170 mAh/g) due to the poor overvoltage characteristics of the LMFP-based active material during the battery charge/discharge process.

In addition, the active material having the olivine structure has poor ionic and electrical conductivity compared to active materials having other structures due to structural characteristics thereof, and these characteristics may be further aggravated when manganese (Mn) is contained in the olivine structure, such as the LMFP-based active material. According to an embodiment, the conductivity may be improved by reducing the particle size of the active material having the olivine structure. However, in this case, a relatively larger amount of active material particles is required to secure the same energy density, and the total volume of the active material powder may increase due to the voids between the particles. Accordingly, the rolling density of the electrode may decrease, and the energy density of the secondary battery cell may be lowered.

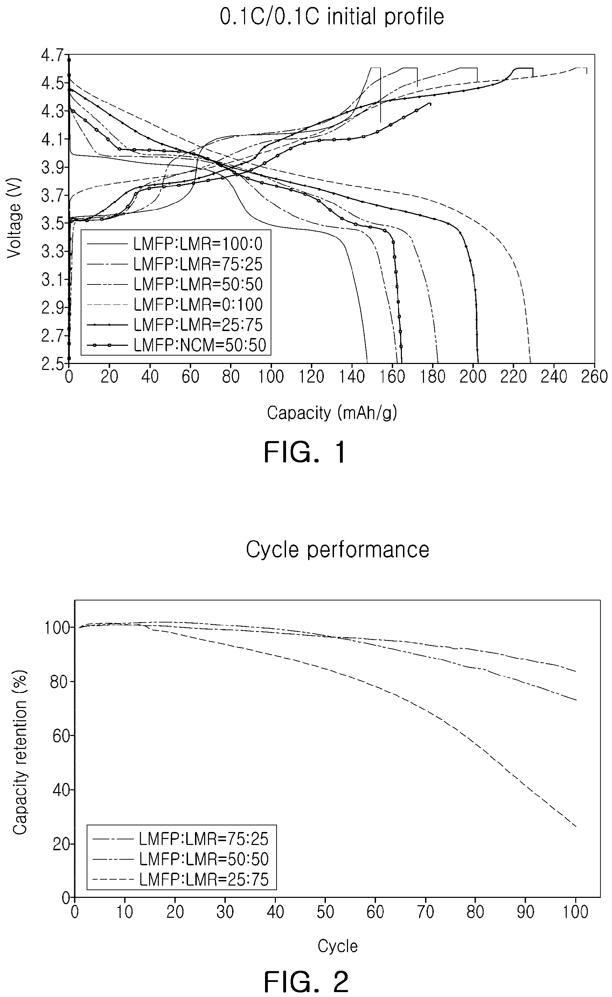

According to an embodiment of the present disclosure, the above-described problems may be alleviated to provide a cathode active material for a lithium secondary battery having excellent overvoltage characteristics, capacity characteristics, and the like. Hereinafter, the embodiments of the present disclosure will be described in detail with reference to FIGS. 1 and 2. FIG. 1 is a diagram illustrating charge/discharge curves for a lithium secondary battery including a cathode according to an embodiment and a comparative example. FIG. 2 is a diagram illustrating the results of evaluating room temperature life characteristics for a lithium secondary battery including a cathode according to an embodiment and a comparative example.

### Cathode Active Material

According to an embodiment of the present disclosure, a cathode active material includes a first active material and a second active material, and the first active material includes an olivine structured active material, and the second active material includes lithium-rich oxide. The weight of the first active material included in the cathode active material is greater than or equal to the weight of the second active material included in the cathode active material.

In some implementations, the first active material may include lithium metal oxide particles as an olivine structured active material having excellent structural stability. In detail, the olivine structured active material may be represented by the following chemical formula 1.

[Chemical Formula 1] LiMePO₄

In the chemical formula 1, Me is at least one element selected from the group consisting of Co, Ni, Fe, and Mn.

For example, the first active material may be an LFP (lithium-iron-phosphate)-based active material containing iron (Fe), or a lithium-manganese-iron-phosphate (LMFP)-based active material in which part of the iron (Fe) in the LFP-based active material is replaced with manganese (Mn).

The particle composition of the first active material represented by the chemical formula 1 may be confirmed by inductively coupled plasma (ICP) analysis. For example, the particles of the first active material may be analyzed by ICP, and the number of oxygen atoms may be normalized to 4, thereby obtaining the chemical formula of the first active material.

In some implementations, the first active material may include a carbon coating layer on the surface. When a carbon coating layer is formed on the surface of the first active material, the electronic conductivity of the first active material may be improved. In some embodiments, the carbon coating layer may be included in an amount of more than 0.25 wt% and less than 2 wt% based on the total weight of the cathode active material. For example, the carbon coating layer may be included in an amount of 0.7 wt% or more or 0.9 wt% or more, and 1.5 wt% or less or 1.3 wt% or less, based on the total weight of the cathode active material. The carbon content analysis may be measured using a CS Analyzer.

In some embodiments, the second active material may include lithium-rich oxide particles having a high discharge capacity. In detail, the lithium-rich oxide may be represented by the following chemical formula 2.

[Chemical Formula 2] Liₐ[MₓNi_{y}Mn_{z}]O_{b}

In the chemical formula 2, M is at least one element selected from the group consisting of Co, Mg, Ti, Al, Fe, Ru, Zr, W, Sn, Sr, Nb, Mo, Cu, Zn, Cr, Ga, V, and Bi, 0≤x≤0.9, 0≤y≤0.9, x+y>0, 0.1≤z≤0.9, 1.8≤a+x+y+z≤2.2, 1.05≤a/(x+y+z)≤1.95, and 1.8≤b≤2.2.

The cathode active material represented by the chemical formula 2 is a lithium-rich oxide particle having a high discharge capacity, and may be a composite of 1) an oxide of a lithium-rich phase such as Li₂MnO₃ and 2) a layered oxide such as an NCM-based cathode active material. Therefore, the cathode active material may also include a layered oxide, unlike an active material that only includes an oxide of a lithium-rich phase, such as Li₂M₁O₂ (wherein, M₁ may be Ni, Co, Fe, Mn, Zn, Mg, Ca, Cu, or the like) and Li₂M₂O₃ (wherein, M₂ may be Mn, Sn, Mo, Ru, Ir, or the like). Therefore, the cathode active material may have better crystal structure stability and long-term life performance than the active material that only includes an oxide of a lithium-rich phase described above.

In some embodiments, in the chemical formula 2, 0<x≤0.9, 0.05≤x≤0.9, 0.1≤x≤0.9, 0<x≤0.8, 0.05≤x≤0.8, or 0.1≤x≤0.8.

In some implementations, in the chemical formula 2, 0<y≤0.9, 0.05≤y≤0.9, 0.1≤y≤0.9, 0<y≤0.8, 0.05≤y≤0.8, or 0.1≤y≤0.8.

In some implementations, in the chemical formula 2, 1.1≤a/(x+y+z)≤1.95, 1.15≤a/(x+y+z)≤1.95, 1.2≤a/(x+y+z)≤1.95, or 1.3≤a/(x+y+z)≤1.95.

In some implementations, the mole fraction of manganese with respect to all elements excluding lithium and oxygen in the lithium-rich oxide particles may be from 0.5 to 0.75. For example, in the chemical formula 2, 0.5≤z/(x+y+z)≤0.75 may be satisfied.

In some implementations, in the chemical formula 2, 0.25≤(x+y)/(x+y+z)≤0.5 may be satisfied.

In some embodiments, the mole fraction of cobalt relative to all elements excluding lithium and oxygen in the lithium-rich oxide particles may be 0 to 0.02. For example, the lithium-rich oxide particles may not contain cobalt.

In some embodiments, in the chemical formula 2, 1.9≤b≤2.1, or 1.95≤b≤2.05 may be satisfied.

The chemical structure represented by the chemical formula 2 represents a bonding relationship included in the structure of the cathode active material, and does not exclude other additional elements. For example, M includes Co, and Co may serve as a main active element of the cathode active material together with Ni and Mn. The chemical formula 2 is provided to express the bonding relationship of the main active element, and should be understood as encompassing the introduction and substitution of additional elements.

In some embodiments, in addition to the main active element, auxiliary elements may be further included to enhance the chemical stability of the cathode active material structure. The auxiliary elements may be incorporated into the cathode active material to form a bond, and in this case, it should be understood that they are included within the chemical structure range represented by chemical formula 1.

The auxiliary elements may include at least one of, for example, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary elements may also act as auxiliary active elements that contribute to the capacity/output activity of the cathode active material, such as Al, together with Co or Mn.

In some embodiments, the cathode active material may further include a coating material or a doping material containing a coating element or a doping element. For example, elements substantially identical to or similar to the auxiliary elements described above may be used as the coating element or doping element. For example, the above-described elements may be used alone or in combination of two or more. In this case, the upper operating voltage of the lithium secondary battery may be controlled, thereby suppressing the voltage decay of the lithium secondary battery.

The coating element or doping element may be present on the particle surface of the cathode active material, or may penetrate through the particle surface of the cathode active material and be included in the bonding structure represented by the chemical formula 2.

In some embodiments, the coating material may form a coating layer having a sea-type shape or an island-type shape.

In some embodiments, the content of the coating element in the particles of the cathode active material may be 500 to 8,000 ppm, 1,000 to 8,000 ppm, or 1,500 to 8,000 ppm of the total weight of all elements excluding lithium and oxygen. When the content of the coating element is as described above, the initial capacity decrease and resistance increase of the lithium secondary battery may be prevented, and the voltage drop of the lithium secondary battery may be further suppressed.

In some embodiments, the coating material may be formed by a dry coating method or a wet coating method. For example, the particles of the cathode active material and the coating source may be dry mixed or wet mixed and heat treated (for example, sintered or dried) to form a coating material on the surface of the particles of the cathode active material. A coating source known in the art may be used as the coating source. For example, examples of the coating source may contain B, Al, W, Zr, Ti, Mg, Co, and the like.

The particle composition of the cathode active material represented by the chemical formula 2 above may be confirmed by inductively coupled plasma (ICP) analysis. For example, the particles of the cathode active material may be analyzed by ICP, and the number of oxygen atoms may be normalized to 1.8 to 2.2 (for example, 2), thereby obtaining the chemical formula of the cathode active material.

In some embodiments, the cathode active material may include an LMFP (lithium-manganese-iron-phosphate)-based active material as the first active material, and an LMR (lithium-manganese-rich)-based active material as the second active material. The LMFP-based active material has stable structural characteristics at a high voltage of 4 V or higher, thereby improving the life performance of the cathode and the secondary battery, and the LMR-based active material has a relatively high oxidation voltage (operating voltage) range and capacity, thereby complementing the relatively low capacity characteristics of the LMR-based active material. In particular, the LMR-based active material has a relatively high oxidation voltage range and capacity compared to the NCM (nickel-cobalt-manganese)-based active material, so that when the LMFP-based active material and the LMR-based active material, which have stable characteristics at high voltage, are mixed, the relatively low-capacity characteristics of the LMFP-based active material may be excellently supplemented compared to the NCM-based active material.

In some embodiments, the cathode active material may be represented by the following chemical formula 3.

[Chemical Formula 3] LiₐNi_{b}Mn_{c}Fe_{d}PₑO_{f}

In the chemical formula 3, 1.002≤a≤1.196, 0.003≤b≤0.196, 0.6≤c≤0.649, 0.204≤d≤0.396, 0.51≤e≤0.99, and 3.02≤f≤3.98.

The weight of the first active material included in the cathode active material is greater than or equal to the weight of the second active material included in the cathode active material. In detail, the weight of the first active material included in the cathode active material may be 50 wt% or more, 60 wt% or more, 70 wt% or more, or 80 wt% or more, and may be less than 100 wt%, 99 wt% or less, 95 wt% or less, or 90 wt% or less. The weight of the second active material included in the cathode active material may be greater than 0 wt%, 1 wt% or more, 5 wt% or more, or 10 wt% or more, and may be less than 50 wt%, 40 wt% or less, 30 wt% or less, or 20 wt% or less. In some embodiments, the weight ratio of the first active material and the second active material included in the cathode active material may be 65:35 to 85:15.

When the contents of the first active material and the second active material among the cathode active materials are adjusted as described above, a high-capacity lithium secondary battery cathode active material may be provided while improving the life performance of the cathode active material and having excellent overvoltage characteristics.

In some embodiments, the average particle diameter (D50) of the second active material may be larger than the average particle diameter (D50) of the first active material. In detail, the cathode active material may improve the rolling density of the cathode by including the first active material and the second active material in a bimodal structure. In more detail, the cathode active material may have a more detailed bimodal structure by including small particles instead of large particles having an average particle diameter (D50) of about 10 µm, and by including smaller particles instead of small particles having an average particle diameter (D50) of about 3 µm. For example, the average particle diameter (D50) of the first active material may be 0.3 µm to 5 µm, and the average particle diameter (D50) of the second active material may be 2 µm to 9 µm. The method for measuring the average particle diameter (D50) is not particularly limited. For example, the average particle diameter (D50) may be measured by a laser diffraction analyzer (MT 3000 by Microtrac, or the like) according to the laser diffraction method.

The olivine structured active material included in the first active material has low conductivity performance due to the material characteristics, and if the particle size increases, it may become a factor that deteriorates the performance (capacity, output life, or the like) of the lithium secondary battery. Accordingly, the above-described problem may occur in a bimodal structure in which the average particle diameter (D50) of the first active material is larger than the average particle diameter (D50) of the second active material.

On the other hand, when the cathode active material includes the first active material and the second active material in a bimodal structure in which the average particle diameter (D50) of the second active material is larger than the average particle diameter (D50) of the first active material, the occurrence of such problems may be prevented and the rolling density of the cathode may be further improved.

### Cathode for Lithium Secondary Battery

A cathode for a lithium secondary battery according to an embodiment includes a cathode active material according to any one of the above-described embodiments. For example, the cathode for a lithium secondary battery may include a cathode current collector; and a cathode mixture layer on at least one surface of the cathode current collector. The cathode mixture layer may include a cathode active material according to any one of the above-described embodiments.

The components of the cathode current collector are not particularly limited. For example, the cathode current collector may be a plate or foil formed of at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. In some embodiments, the cathode current collector may be aluminum foil (Al-foil).

The thickness of the cathode current collector is not particularly limited. For example, the thickness of the cathode current collector may be 0.1 µm to 50 µm.

The structure of the cathode mixture layer is not particularly limited. For example, the cathode mixture layer may be a single-layer structure or a multilayer structure including two or more mixture layers.

The content of the cathode active material included in the cathode mixture layer is not particularly limited. For example, the content of the cathode active material included in the cathode mixture layer may be 80 wt% to 99 wt%.

In some embodiments, the cathode mixture layer may further include a binder. The binder is not particularly limited. For example, the binder may include at least one or two of styrene butadiene rubber (SBR), polytetrafluoroethylene, polyvinylidene fluoride, vinylidene fluoride/hexafluoropropylene copolymer, polyacrylonitrile, polymethyl methacrylate, and the like. The content of the binder included in the cathode mixture layer is not particularly limited, and may be, for example, 0.1 wt% to 10 wt%, respectively.

In some embodiments, the cathode mixture layer may further include a conductive material. The conductive material is not particularly limited. For example, the conductive material may include at least one or two of graphite such as natural graphite or artificial graphite; a carbon-based material such as carbon black, acetylene black, Ketjen black, channel black, furnace black, lamp black, thermal black, carbon fiber, carbon nanotube (CNT), or the like; metal powder or metal fiber such as copper, nickel, aluminum, silver or the like; conductive whiskers such as zinc oxide, potassium titanate, or the like; conductive metal oxide such as titanium oxide; a conductive polymer such as polyphenylene derivatives; or the like. The content of the conductive material included in the cathode mixture layer is not particularly limited, and for example, may be 0.1 wt% to 10 wt%, respectively.

In some embodiments, the rolling density of the cathode for a lithium secondary battery may be 2.0 g/cc to 3.0 g/cc. In detail, the rolling density of the cathode for a lithium secondary battery may be greater than 2.2 g/cc, greater than or equal to 2.3 g/cc, greater than or equal to 2.4 g/cc, greater than or equal to 2.45 g/cc or 2.5 g/cc, and may be 2.9 g/cc or less, 2.8 g/cc or less, 2.7 g/cc or less, 2.6 g/cc or less, or less than 2.55 g/cc. The rolling density may refer to the mixture density of the cathode mixture layer.

The method for manufacturing the cathode for a lithium secondary battery according to the above-described embodiments is not particularly limited. For example, the cathode for a lithium secondary battery may be manufactured by applying a cathode slurry including a cathode active material according to any one of the above-described embodiments to at least one surface of a cathode current collector and then drying it. The method for applying the cathode slurry is not particularly limited. For example, the cathode slurry may be applied using a method such as bar coating, casting, or spraying. The drying temperature of the cathode slurry is not particularly limited. For example, the drying of the cathode slurry may be performed at 100°C to 200°C.

### Lithium Secondary Battery

A lithium secondary battery according to an embodiment includes a cathode for a lithium secondary battery according to any one of the above-described embodiments. For example, the lithium secondary battery may include a unit cell including the cathode for a lithium secondary battery described above, an anode, and a separator. The separator may be disposed between the cathode and the anode described above in the unit cell.

The anode is not particularly limited. For example, the anode may include an anode current collector; and an anode mixture layer on at least one surface of the anode current collector.

The components of the anode current collector are not particularly limited. For example, the anode current collector may be a plate or foil formed of at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. In some implementations, the anode current collector may be copper foil (Cu-foil).

The thickness of the anode current collector is not particularly limited. For example, the thickness of the anode current collector may be 0.1 µm to 50 µm.

The anode mixture layer may include an anode active material. The anode active material is not particularly limited. For example, the anode active material may be at least one selected from the group consisting of carbon-based materials such as crystalline carbon, amorphous carbon, carbon composites, and carbon fibers; lithium metal; lithium alloys; silicon-containing materials, and tin-containing materials.

The crystalline carbon may be, for example, graphite-based carbon such as natural graphite, artificial graphite, graphitized coke, mesocarbon microbeads (MCMB), and mesophase pitch-based carbon fibers (MPCF).

The amorphous carbon may be, for example, hard carbon, soft carbon, coke, mesocarbon microbeads (MCMB), or mesophase pitch-based carbon fibers (MPCF).

The elements included in the lithium alloy may be, for example, aluminum, zinc, bismuth, cadmium, antimony, silicon, lead, tin, gallium, or indium.

The silicon-containing material is not particularly limited as long as it contains silicon, and may be an active material capable of alloying with lithium (Li). For example, the silicon-containing material may be at least one selected from the group consisting of silicon (Si), silicon oxide (SiOx; 0<x<2), metal-doped silicon oxide (SiOx; 0<x<2), carbon-coated silicon oxide (SiOx; 0<x<2), silicon-carbon composite (Si-C), and silicon alloy.

The anode mixture layer may further include a binder. The binder is not particularly limited. For example, the binder may be any one of a rubber-based binder such as styrene-butadiene rubber (SBR), fluorine-based rubber, ethylene propylene rubber, butadiene rubber, isoprene rubber, and silane-based rubber; a cellulose-based binder such as carboxymethyl cellulose (CMC), hydroxypropyl methyl cellulose, methyl cellulose, or an alkali metal salt thereof; and combinations thereof.

The anode mixture layer may further include a conductive material. The conductive material is not particularly limited. For example, the conductive material may be at least one selected from a particulate carbon material and a fibrous carbon material. The particulate carbon material may be carbon black such as Super-P, Super-C, acetylene black, Ketjen black, or the like, and the fibrous carbon material may be carbon fiber, carbon nanotube (CNT), vapor-grown carbon fiber (VGCF), or the like.

The separator is not particularly limited. For example, the separator may include a porous polymer film manufactured from a polyolefin polymer such as an ethylene homopolymer, a propylene homopolymer, an ethylene/butene copolymer, an ethylene/hexene copolymer, an ethylene/methacrylate copolymer, or the like. In addition, the separator may include a nonwoven fabric formed from a high-melting-point glass fiber, a polyethylene terephthalate fiber, or the like.

In some embodiments, the lithium secondary battery may be manufactured by housing the unit cell in a pouch, which is a battery case, and then injecting an electrolyte.

The electrolyte may include an organic solvent and a lithium salt. The organic solvent acts as a medium through which ions involved in the electrochemical reaction of the battery may move, and may be used alone or in combination of two or more types of carbonate-based, ester-based, ether-based, ketone-based, alcohol-based, or aprotic solvents, and the mixing ratio in the case of using two or more types of solvents may be appropriately adjusted according to the required battery performance.

The lithium salt is dissolved in the organic solvent and acts as a source of lithium ions in the battery, and is a substance that enables the basic operation of the lithium secondary battery and promotes the movement of lithium ions between the cathode and the anode. A known substance may be used as the lithium salt at a concentration appropriate for the purpose. The electrolyte may further include a known solvent and a known additive to improve charge/discharge characteristics, flame retardancy characteristics, or the like, as needed.

In some embodiments, the unit cell may include a solid electrolyte without a separator between the cathode and the anode. The solid electrolyte is not particularly limited, and may be, for example, an oxide-based solid electrolyte, a sulfide-based solid electrolyte, or a polymer-based solid electrolyte.

### Example

### 1 Manufacturing of Cathode and Secondary Battery

### 1) Manufacturing of Cathode for Lithium Secondary Battery

### (1) Preparation of Cathode Active Material

Lithium-manganese-iron-phosphate (LMFP)-based active material, which is an olivine structure compound represented by the chemical formula of LiMn_{0.6}Fe_{0.4}PO₄ and has a carbon coating layer formed on the surface, was prepared as the first active material (average particle size D50: approximately 1 µm, carbon coating content: approximately 2 wt%), and lithium-manganese-rich (LMR)-based active material, which is lithium-rich oxide represented by the chemical formula of Li_{1.2}Ni_{0.4} Mn_{0.6}O₂, was prepared as the second active material (average particle size D50: approximately 3 µm). The first and second active materials were blended at different ratios for respective example and comparative example and applied as the respective cathode active materials. Meanwhile, in the case of Comparative Example 4, the Ni-Co-Mn(NCM)-based active material (average particle size D50: approximately 3 µm) represented by the chemical formula of LiNi_{0.6}Co_{0.1}Mn_{0.3}O₂ was used as the second active material.

The blending ratio of each cathode active material derived by performing inductively coupled plasma (ICP) analysis on the cathode active material using an Agilent 700s which is the Inductively Coupled Plasma-Optical Emission Spectrometer (ICP-OES) is as illustrated in Table 1 below. In detail, the ICP analysis was performed as follows:
1. Put 0.3 g of sample and the same amount of ultrapure water into a platinum crucible.
2. Add concentrated nitric acid and hydrogen peroxide and heat to decompose.
3. Completely dry the sample to remove the hydrofluoric acid component in the sample.
4. Add a small amount of nitric acid to the residue, heat to dissolve, and then dilute to 10 mL with ultrapure water.
5. Start measurement.

In addition, the weight (carbon content) of the carbon coating layer based on the total weight of the cathode active material is measured using CS Analyzer (CS844), and the results are illustrated in Table 1 below. In detail, the analysis using CS Analyzer was performed as follows:
1. Considering the carbon (C) and sulfur (S) contents in the sample, put 0.1 to 1.0 g of the sample in a ceramic crucible and measure the weight.
2. Add 1 spoon of a comburent (LECOCEL).
3. Add 1 spoon of iron chips.

### (2) Cathode Production

Based on the solid content, 93 wt% of cathode active material, 2 wt% of binder (PVDF, Polyvinylidene fluoride), and 5 wt% of conductive material (carbon black) were mixed with a solvent (NMP, N-Methyl-2-pyrrolidone) to produce a cathode slurry. The cathode slurry was applied on one side of a cathode current collector (Al-foil) having a thickness of 20 µm at a loading level of 10 to 12 mg/cm², and dried at 100°C for 12 hours to produce a cathode in which a cathode mixture layer was formed on one side of the cathode current collector. The dried cathode was passed through a roll press device to perform rolling. The rolling density (mixture density) of the produced cathode is as illustrated in Table 1 below.

### 2) Manufacturing of Lithium Secondary Battery (Manufacturing of Lithium Secondary Battery Cathode Half-Cell)

The cathode manufactured as described above was cut into a circle with a diameter of 14 mm. Then, the cathode was placed on a coin cell case of the 2032 standard, and a polyolefin separator with a diameter of 18 mm was interposed thereon. An electrolyte solution in which 1 M of LiPF₆ was dissolved in a solvent mixed with ethylene carbonate (EC) and diethyl carbonate (DEC) was injected into the case, and then a Li foil with a thickness of 0.4 mm and a diameter of 16 mm was placed on the separator to assemble the coin cell. The cathode half-cell of the coin cell lithium secondary battery manufactured as described above was applied as a secondary battery sample of the examples and comparative examples.

### 2. Lithium Secondary Battery Evaluation

### 1) Capacity Characteristics

The lithium secondary battery samples manufactured as described above were subjected to CC/CV charging (0.1C 4.6V, 0.05C CUT-OFF) and CC discharging (0.1C 2.5V CUT-OFF) at 25°C, and the discharge capacity was measured. The measurement results are illustrated in Table 1 below. At this time, the charge/discharge curves for the lithium secondary batteries of Examples 2 and 4 and Comparative Examples 1 to 4 are as illustrated in FIG. 1.

### 2) Overvoltage Characteristics

The lithium secondary battery samples manufactured as described above were charged at 25°C under the conditions of 0.1C 4.6V, 0.05C CUT-OFF, and the voltage change (Delta Voltage; dV) value for 10 minutes after the charge was measured under the data recording conditions of 10mV. The results are illustrated in Table 1 below. If the voltage change of the secondary battery is large during the same time after charging under the same conditions, it means that the current (I) value is the same but the voltage change (dV) is large in Ohm's law (V=IR), so it can be determined that the R value, which is the internal resistance of the cell, has increased.

### 3) Room Temperature Life Characteristics

The lithium secondary battery sample manufactured as described above was subjected to CC/CV charging (0.1C 4.6V, 0.05C CUT-OFF) and CC discharging (0.1C 2.5V CUT-OFF) twice at 25°C, and then the life characteristics evaluation began. The life evaluation conditions were set to perform 100 cycles of CC/CV charging (0.5C 4.6V, 0.05C CUT-OFF) and CC discharging (1C 2.5V CUT-OFF) on the lithium secondary battery sample at 25°C. The room temperature life capacity retention rate (%) is defined as capacity at 100 cycles/capacity at 1 cycle, and the results are illustrated in Table 2 below. In addition, the change in the capacity retention rate according to the life of the lithium secondary batteries of Examples 2 and 4 and Comparative Example 3 is as illustrated in FIG. 2.

**[Table 1]**

| | Cathode Composition | Blending Ratio (Weight Ratio) | Carbon Content (wt%) | Rolling Density (g/cc) | Capacity (mAh/g) | dV (V) |
|---|---|---|---|---|---|---|
| Example 1 | LMFP + LMR | 85% : 15% | 1.2 | 2.40 | 165 | 0.24 |
| Example 2 | LMFP + LMR | 75% : 25% | 1.1 | 2.48 | 173 | 0.15 |
| Example 3 | LMFP + LMR | 65% : 35% | 0.9 | 2.51 | 180 | 0.11 |
| Example 4 | LMFP + LMR | 50% : 50% | 0.8 | 2.55 | 188 | 0.09 |
| Comparative Example 1 | LMFP | 100% | 1.5 | 2.20 | 150 | 0.38 |
| Comparative Example 2 | LMR | 100% | 0 | 2.80 | 225 | 0.04 |
| Comparative Example 3 | LMFP + LMR | 25% : 75% | 0.6 | 2.65 | 201 | 0.06 |
| Comparative Example 4 | LMFP + NCM | 50% : 50% | 0.8 | 3.01 | 165 | 0.02 |

**[Table 2]**

| | Cathode Composition | Blending Ratio (Weight Ratio) | 100 Cycle Capacity Retention Rate (%) |
|---|---|---|---|
| Example 1 | LMFP + LMR | 85% : 15% | - |
| Example 2 | LMFP + LMR | 75% : 25% | 83.67 |
| Example 3 | LMFP + LMR | 65% : 35% | - |
| Example 4 | LMFP + LMR | 50% : 50% | 73.17 |
| Comparative Example 1 | LMFP | 100% | - |
| Comparative Example 2 | LMR | 100% | - |
| Comparative Example 3 | LMFP + LMR | 25% : 75% | 26.55 |
| Comparative Example 4 | LMFP + NCM | 50% : 50% | - |

Referring to Tables 1 and 2, in the case of Comparative Example 1, which only includes LMFP-based active materials with an olivine structure as the cathode active material, the rolling density and capacity values are low, and the dV value is high, so it can be confirmed that it is relatively inferior in terms of overvoltage characteristics, energy density, or the like. In addition, in the case of only including LMR-based active materials as the cathode active material (Comparative Example 2), it is determined that the life performance (capacity retention rate) of the battery is relatively low. This is even more so when considering that the life performance (capacity retention rate) of the battery is relatively low when the ratio of LMR-based active materials to LMFP-based active materials is larger than that of LMFP-based active materials (Comparative Example 3), even when including cathode active materials in which LMFP-based active materials and LMR-based active materials are blended.

On the other hand, in the case of Comparative Example 4, which includes NCM-based active materials instead of LMR-based active materials as the cathode active material, it is determined that it is inferior in terms of energy density because the capacity and oxidation voltage range are relatively low.

On the other hand, in the case of Examples 1 to 4, which include a cathode active material in which an LMFP-based active material and an LMR-based active material having an olivine structure are blended, and the weight of the LMFP-based active material is greater than or equal to the weight of the LMR-based active material, the rolling density and capacity values are high and the dV value is low, so not only are the performances such as the overvoltage characteristics and energy density excellent, but the life characteristics are also expected to be relatively excellent.

As set forth above, according to an embodiment, a cathode active material having improved overvoltage characteristics may be provided.

According to an embodiment, life performance of a cathode for a lithium secondary battery may be improved.

According to an embodiment, a cathode for a lithium secondary battery having excellent energy density may be provided.

Only specific examples of implementations of certain embodiments are described. Variations, improvements and enhancements of the disclosed embodiments and other embodiments may be made based on the disclosure of this patent document.

The present disclosure relates also to the following numbered aspects:
Aspect 1) A cathode active material comprising: a first active material and a second active material, wherein the first active material includes an active material having an olivine structure, the second active material includes a lithium-rich oxide, and a weight of the first active material included in the cathode active material is greater than or equal to a weight of the second active material included in the cathode active material.
Aspect 2) The cathode active material of aspect 1, wherein a weight ratio of the first active material and the second active material included in the cathode active material is 65:35 to 85:15.
Aspect 3) The cathode active material of aspect 1 or 2, wherein the weight of the first active material included in the cathode active material is 50 wt% or more, and less than 100 wt%.
Aspect 4) The cathode active material of anyone of aspects 1 to 3, wherein the weight of the second active material included in the cathode active material is greater than 0 wt%, and less than 50 wt%.
Aspect 5) The cathode active material of anyone of aspects 1 to 4, wherein an average particle diameter (D50) of the second active material is larger than an average particle diameter (D50) of the first active material.
Aspect 6) The cathode active material of anyone of aspects 1 to 5, wherein an average particle diameter (D50) of the first active material is 0.3 µm to 5 µm.
Aspect 7) The cathode active material of anyone of aspects 1 to 6, wherein an average particle diameter (D50) of the second active material is 2 µm to 9 µm.
Aspect 8) The cathode active material of anyone of aspects 1 to 7, wherein the first active material includes a carbon coating layer on a surface.
Aspect 9) The cathode active material of aspect 8, wherein the carbon coating layer is included in an amount of more than 0.25 wt% and less than 2 wt% based on a total weight of the cathode active material.
Aspect 10) The cathode active material of anyone of aspects 1 to 9, wherein the active material of the olivine structure is represented by chemical formula 1: LiMePO₄, where Me is at least one element selected from the group consisting of Co, Ni, Fe, and Mn.
Aspect 11) The cathode active material of anyone of aspects 1 to 10, wherein the first active material is a lithium-manganese-iron-phosphate (LMFP)-based active material.
Aspect 12) The cathode active material of anyone of aspects 1 to 11, wherein the lithium-rich oxide is represented by chemical formula 2: Liₐ[MₓNi_{y}Mn_{z}]O_{b}, where M is at least one element selected from the group consisting of Co, Mg, Ti, Al, Fe, Ru, Zr, W, Sn, Sr, Nb, Mo, Cu, Zn, Cr, Ga, V, and Bi, 0≤x≤0.9, 0≤y≤0.9, x+y>0, 0.1≤z≤0.9, 1.8≤a+x+y+z≤2.2, 1.05≤a/(x+y+z)≤1.95, and 1.8≤b≤2.2.
Aspect 13) The cathode active material of anyone of aspects 1 to 12, wherein the cathode active material is represented by chemical formula 3: LiₐNi_{b}Mn_{c}Fe_{q}PₑO_{f}, wherein in the chemical formula 3, 1.002≤a≤1.196, 0.003≤b≤0.196, 0.6≤c≤0.649, 0.204≤d≤0.396, 0.51≤e≤0.99, and 3.02≤f≤3.98.
Aspect 14) A cathode for a lithium secondary battery, comprising the cathode active material of anyone of aspects 1 to 13.
Aspect 15) A lithium secondary battery comprising the cathode for a lithium secondary battery according to aspect 14.

## Claims

1. A cathode active material comprising:
a first active material and a second active material,
wherein the first active material includes an active material having an olivine structure,
the second active material includes a lithium-rich oxide, and
a weight of the first active material included in the cathode active material is greater than or equal to a weight of the second active material included in the cathode active material.

2. The cathode active material of claim 1, wherein a weight ratio of the first active material and the second active material included in the cathode active material is 65:35 to 85:15.

3. The cathode active material of claim 1 or 2, wherein the weight of the first active material included in the cathode active material is 50 wt% or more, and less than 100 wt%.

4. The cathode active material of anyone of claims 1 to 3, wherein the weight of the second active material included in the cathode active material is greater than 0 wt%, and less than 50 wt%.

5. The cathode active material of anyone of claims 1 to 4, wherein an average particle diameter (D50) of the second active material is larger than an average particle diameter (D50) of the first active material.

6. The cathode active material of anyone of claims 1 to 5, wherein an average particle diameter (D50) of the first active material is 0.3 µm to 5 µm.

7. The cathode active material of anyone of claims 1 to 6, wherein an average particle diameter (D50) of the second active material is 2 µm to 9 µm.

8. The cathode active material of anyone of claims 1 to 7, wherein the first active material includes a carbon coating layer on a surface.

9. The cathode active material of claim 8, wherein the carbon coating layer is included in an amount of more than 0.25 wt% and less than 2 wt% based on a total weight of the cathode active material.

10. The cathode active material of anyone of claims 1 to 9, wherein the active material of the olivine structure is represented by chemical formula 1: LiMePO₄, where Me is at least one element selected from the group consisting of Co, Ni, Fe, and Mn.

11. The cathode active material of anyone of claims 1 to 10, wherein the first active material is a lithium-manganese-iron-phosphate (LMFP)-based active material.

12. The cathode active material of anyone of claims 1 to 11, wherein the lithium-rich oxide is represented by chemical formula 2: Liₐ[MₓNi_{y}Mn_{z}]O_{b}, where M is at least one element selected from the group consisting of Co, Mg, Ti, Al, Fe, Ru, Zr, W, Sn, Sr, Nb, Mo, Cu, Zn, Cr, Ga, V, and Bi, 0≤x≤0.9, 0≤y≤0.9, x+y>0, 0.1≤z≤0.9, 1.8≤a+x+y+z≤2.2, 1.05≤a/(x+y+z)≤1.95, and 1.8≤b≤2.2.

13. The cathode active material of anyone of claims 1 to 12, wherein the cathode active material is represented by chemical formula 3: LiₐNi_{b}Mn_{c}Fe_{d}PₑO_{f},
wherein in the chemical formula 3, 1.002≤a≤1.196, 0.003≤b≤0.196, 0.6≤c≤0.649, 0.204≤d≤0.396, 0.51≤e≤0.99, and 3.02≤f≤3.98.

14. A cathode for a lithium secondary battery, comprising the cathode active material of anyone of claims 1 to 13.

15. A lithium secondary battery comprising the cathode for a lithium secondary battery according to claim 14.
